# FASCICULE DE BREVET EUROPEEN

(11) **EP 3 478 493 B1**
(45) Date de publication et mention de la délivrance du brevet: **11.11.2020**
(21) Numéro de dépôt: 17733484.4
(22) Date de dépôt: 30.06.2017
(51) Int. Cl.: B32B 7/02, B42D 25/29, B42D 25/324, B42D 25/425, G07D 7/12, B42D 25/45

(54) **PROCEDE DE FABRICATION D'UN DOCUMENT DE SECURITE PRESENTANT UN SIGNE DE SECURITE A CONTRASTE DE BRILLANCE**
VERFAHREN ZUR HERSTELLUNG EINES SICHERHEITSDOKUMENTS MIT EINEM SICHERHEITSZEICHEN, DAS EINEN GLANZKONTRAST ERZEUGT
PROCESS FOR MANUFACTURING A SECURITY DOCUMENT COMPRISING A SECURITY SIGN THAT PRODUCES A CONTRAST IN SHININESS

(30) Priorité: 30.06.2016 FR 1656161
(43) Date de publication de la demande: 08.05.2019
(73) Titulaire: Banque De France, 75001 Paris (FR)
(72) Inventeur: BARATS, Michel, 63800 Cournon (FR)
(74) Mandataire: Regimbeau
(86) Numéro de dépôt international: PCT/EP2017/066388
(87) Numéro de publication internationale: WO 2018/002366

(56) Documents cités:
- WO-A2-2005/074358
- US-A1- 2010 071 237
- US-A1- 2012 064 303
- US-A1- 2014 367 957

## Description

### DOMAINE DE L'INVENTION

L'invention concerne un procédé de fabrication d'un document de sécurité, tel qu'un billet de banque par exemple, ainsi qu'un tel document de sécurité et la matrice utilisée pour ce procédé.

### ETAT DE LA TECHNIQUE

Afin de garantir l'authenticité de documents officiels ou de sécurité, ces documents peuvent être munis de signes de sécurité tels que des filigranes.

Les filigranes papetiers ombrés sont des motifs visibles lorsque l'on observe le document par transparence. Ces motifs sont obtenus par des variations de densité de fibres et/ou d'épaisseur du substrat en papier, créant des variations d'opacité du substrat en papier lorsque celui-ci est observé en transparence.

On connait des techniques permettant de former un filigrane dans un substrat en papier. L'une de ces techniques consiste notamment à faire défiler une couche de pâte à papier sur une toile sans fin entre des rouleaux filigraneurs. Les rouleaux filigraneurs présentent des motifs en creux et/ou en relief qui viennent créer dans la couche de pâte une empreinte qui subsistera dans le papier une fois séché.

Une autre technique, dite « à la forme ronde », consiste à faire se déposer une couche de pâte à papier à la surface d'une toile présentant des creux et des reliefs permettant de faire varier la quantité de fibres déposées.

Le substrat en papier peut être utilisé ensuite pour la fabrication de documents de sécurité tels que des billets de banque par exemple. La présence d'un filigrane rend plus difficile la reproduction de ces documents et permet de vérifier leur authenticité.

On connait par ailleurs des techniques de fabrication de billets de banque multicouche comprenant une couche de papier et deux couches en matériau polymère recouvrant les faces de la couche de papier. Ces billets de banque sont généralement fabriqués par laminage d'une bande continue de papier entre deux bandes de films polymère (dans le cas d'un procédé continu), ou par laminage de feuilles successives (dans le cas d'un procédé dit « feuille à feuille »). Les films polymère permettent d'une part de protéger les faces de la couche de papier de l'humidité et des salissures, et d'autre part de rendre le document de sécurité plus résistant à la déchirure. Cela permet d'améliorer la durée de vie des billets de banque (ou des documents de sécurité) par rapport aux billets de banque imprimés sur papier fiduciaire classique.

Le document de brevet US 2014/367957 A1 divulgue un document de sécurité ayant un réseau périodique de microstructure en relief d'image comprenant une courbure de surface périodique convexe placée sur ou dans une surface, de telle sorte que la transmission de la lumière à travers le réseau et la réflexion de la lumière du réseau forment une image moirée agrandie.

### RESUME DE L'INVENTION

Un but de l'invention est de proposer un procédé permettant d'augmenter le niveau de sécurité procuré par la présence d'un signe de sécurité.

Ce but est atteint dans le cadre de la présente invention grâce à un procédé de fabrication d'un document de sécurité à partir d'un substrat, le substrat comprenant au moins une couche de papier et au moins une couche de matériau polymère recouvrant une face de la couche de papier,
le procédé comprenant une étape consistant à former une empreinte dans le substrat par pressage à chaud d'une matrice contre la couche de matériau polymère, la matrice présentant des premiers reliefs comprenant des premiers creux et/ou des premières élévations délimitant plusieurs zones de la matrice, et des deuxièmes reliefs comprenant des deuxièmes creux et/ou des deuxièmes élévations s'étendant à l'intérieur des zones de la matrice, les deuxièmes creux et/ou les deuxièmes élévations présentant des dimensions inférieures aux dimensions des premiers creux et/ou des premières élévations,
de sorte que l'empreinte formée dans le substrat présente des premières zones correspondantes créées par les premiers reliefs, chaque première zone correspondante présentant une opacité inférieure au reste du substrat, et
à l'intérieur d'au moins l'une des premières zones correspondantes du substrat, une deuxième zone correspondante présentant des microstructures créés par les deuxième reliefs, les microstructures étant propres, lorsque le document de sécurité est exposé à un rayonnement lumineux, à réfléchir le rayonnement lumineux selon un ou plusieurs angle(s) privilégié(s) de réflexion, afin que lorsque le document de sécurité est observé selon l'un de ces angles privilégiés de réflexion, la deuxième zone correspondante présente un niveau de brillance différent du niveau de brillance du reste de la première zone correspondante.

Le procédé proposé tire parti de la présence d'un film en matériau polymère pour créer un signe de sécurité additionnel. Ce signe de sécurité est constitué par l'empreinte formée dans le substrat, cette empreinte étant propre à générer deux effets visuels distincts.

Un premier effet visuel est obtenu lorsque le signe de sécurité est observé en transparence, i.e. lorsque les rayons lumineux éclairent le signe de sécurité à travers le substrat. Le signe de sécurité apparait sous la forme d'une ou plusieurs zone(s) claire(s), présentant une opacité inférieure à celle du reste du substrat.

Il est en outre possible de renforcer le premier effet, en utilisant une couche de papier présentant un filigrane papetier. Dans ce cas, l'empreinte peut être formée dans le substrat en étant superposée au filigrane papetier sous-jacent.

Un deuxième effet visuel est obtenu lorsque le signe de sécurité est observé en réflexion, i.e. lorsque les rayons lumineux éclairent le signe de sécurité en se réfléchissant sur le substrat. Le signe de sécurité apparait sous la forme d'une ou plusieurs zone(s) brillantes, dont la brillance varie en fonction de l'angle sous lequel est observé le signe de sécurité.

La conjugaison des deux effets visuels rend plus difficile la reproduction du signe de sécurité, ce qui augmente le niveau de sécurité du document.

Le procédé proposé peut en outre présenter les caractéristiques suivantes :
- avant l'étape de formation de l'empreinte dans le substrat, la couche de matériau polymère présente une brillance de surface inférieure à 40 unités de brillance, avantageusement comprise entre 1 et 30 unités de brillance, de manière encore plus avantageuse comprise entre 5 et 9 unités de brillance,
- après l'étape de formation de l'empreinte dans le substrat, la couche de matériau polymère présente, dans chaque première zone correspondante créée par les premiers reliefs, une brillance supérieure de 10 à 30 unités de brillance par rapport au reste du substrat,
- après l'étape de formation de l'empreinte dans le substrat, chaque première zone correspondante créée par les premiers reliefs présente une opacité inférieure de 1 à 30% par rapport au reste du substrat,
- le document présente, à l'intérieur de chaque deuxième zone correspondante créée par les deuxième reliefs, des microstructures propres à réfléchir un rayonnement lumineux selon un angle privilégié de réflexion, les différentes deuxièmes zones du substrat réfléchissant le rayonnement lumineux selon des angles privilégiés différents,
- les microstructures présentent une amplitude inférieure ou égale à 10 micromètres,
- les microstructures présentent une amplitude supérieure ou égale à 5 micromètres,
- les microstructures présentent une dimension mesurée parallèlement à la face de la couche de papier, inférieure ou égale à 10 micromètres,
- les premières zones correspondantes du substrat créées par les premiers reliefs, présentent chacune une dimension supérieure ou égale à 1 millimètre,
- le polymère est un polypropylène ou un polytéréphtalate d'éthylène.

L'invention concerne également un document de sécurité comportant un substrat comprenant une couche de papier et une couche de matériau polymère recouvrant une face de la couche de papier, et dans lequel une empreinte est formée dans le substrat, l'empreinte formée dans le substrat présentant des premières zones présentant par transparence une première opacité différente de l'opacité du reste du substrat, et une deuxième zone à l'intérieur de l'une des premières zones, la deuxième zone présentant des microstructures propres, lorsque le document de sécurité est exposé à un rayonnement lumineux, à réfléchir le rayonnement lumineux selon un angle privilégié de réflexion, de sorte que lorsque le document de sécurité est observé selon l'angle privilégié, la deuxième zone présente un deuxième niveau de brillance différente- du niveau de brillance du reste de la première zone.

L'invention concerne également une matrice pour réaliser une empreinte dans un substrat pour fabriquer un document de sécurité, la matrice présentant des premiers reliefs formés par des premiers creux et/ou des premières élévations délimitant plusieurs zones de la matrice, et des deuxièmes reliefs formés par des deuxièmes creux et/ou des deuxièmes élévations à l'intérieur des zones de la matrice, les deuxièmes creux et/ou les deuxièmes élévations présentant des dimensions inférieures aux dimensions des premiers creux et/ou des premières élévations.

### PRESENTATION DES DESSINS

D'autres caractéristiques et avantages ressortiront encore de la description qui suit, laquelle est purement illustrative et non limitative, et doit être lue en regard des figures annexées, parmi lesquelles :
- la figure 1 représente de manière schématique un document de sécurité tel qu'il peut être obtenu par le procédé de fabrication conforme à un mode de réalisation de l'invention,
- la figure 2 représente de manière schématique une étape du procédé de fabrication du document de sécurité,
- les figures 3A et 3B représentent de manière schématique un premier exemple de matrice utilisée pour la mise en œuvre du procédé de fabrication du document de sécurité,
- la figure 3C représente de manière schématique un deuxième exemple de matrice utilisée pour la mise en œuvre du procédé de fabrication du document de sécurité,
- la figure 4 représente de manière schématique un exemple de signe de sécurité obtenu par le procédé,
- la figure 5 représente de manière schématique le signe de sécurité tel qu'il apparait lorsqu'il est observé en transparence,
- la figure 6 représente de manière schématique le signe de sécurité tel qu'il apparait lorsqu'il est observé en réflexion.

### DESCRIPTION DETAILLEE D'UN MODE DE REALISATION

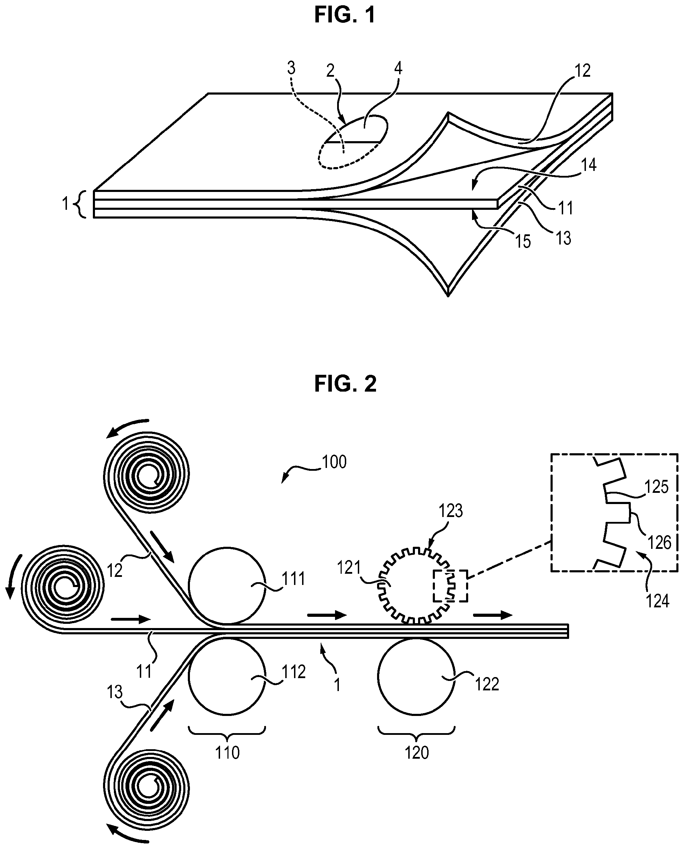

Sur la figure 1, le document de sécurité représenté est par exemple un billet de banque.

Le document de sécurité comprend un substrat multicouche 1 comprenant une couche de papier 11 et deux couches de pelliculage 12 et 13 disposées de part et d'autre de la couche de papier 11.

Le substrat multicouche 1 est de préférence constitué uniquement des trois couches 11, 12 et 13, ainsi que d'éventuelles couches de colles disposées entre les couches afin de favoriser leur adhésion.

La couche de papier 11 présente une première face 14 et une deuxième face 15, opposée à la première face 14.

La première couche de pelliculage 12 recouvre la première face 14 de la couche de papier 11. La deuxième couche de pelliculage 13 recouvre la deuxième face 15 de la couche de papier 11.

La couche de papier 11 présente un grammage compris entre 50 et 85 grammes par mètre carré, et une épaisseur comprise entre 50 et 100 micromètres.

La couche de papier 11 est imprimée sur la première face 14 et/ou la deuxième face 15. L'impression est réalisée sur la ou les face(s) 14 et 15 de la couche de papier 11 avant le pelliculage. De cette manière, l'encre est protégée par la ou les couches de pelliculage 12 et 13.

Chaque couche de pelliculage 12, 13 est formée en un matériau polymère ayant une brillance de surface comprise entre 5 et 9 unités de brillance (UB) et une épaisseur comprise de 18 à 28 micromètres. Le matériau polymère est par exemple un polypropylène (PP) ou un polytéréphtalate d'éthylène (PET).

La brillance de surface du matériau polymère est déterminée par la méthode de test décrite dans la norme ASTM D2457 - 13, « *Standard Test Method for Specular Gloss of Plastic Films and Solid Plastics ».*

Le document de sécurité comprend en outre un signe de sécurité 2 destiné à garantir l'authenticité du document.

Le signe de sécurité 2 comprend d'une part un filigrane papetier 3 formé uniquement dans la couche de papier 11. Le filigrane papetier 3 est constitué par une zone de la couche de papier 11 présentant des variations de densité de fibres et/ou d'épaisseur permettant de créer un motif visible par transparence.

Le signe de sécurité 2 comprend d'autre part une empreinte 4 formée dans le substrat 10, et permettant de renforcer le niveau de sécurité procuré par le filigrane papetier 3.

Comme illustré sur la figure 2, le procédé de fabrication d'un document de sécurité comprend les étapes suivantes.

Selon une première étape, la couche de papier 11 et les deux couches de pelliculage 12 et 13 sont entrainée en défilement à travers une machine de pelliculage 100.

La machine de pelliculage 100 comprend plusieurs groupes de rouleaux presseurs 110 et 120 entrainés simultanément en rotation.

Selon une deuxième étape, la couche de papier 11 et les deux couches de pelliculage 12 et 13 sont entrainées ensemble à travers un premier groupe de rouleaux presseurs 110. La couche de papier 2 et les couches de pelliculage 3 et 4 passent entre les rouleaux presseurs 111 et 112 en étant superposés les unes aux autres.

Le premier groupe de rouleaux presseurs 110 permet de recouvrir la première face et la deuxième face de la couche de papier 2 avec la première couche de pelliculage 3 et de la deuxième couche de pelliculage 4 respectivement, de manière à former le substrat multicouche 1.

Selon une troisième étape, le substrat multicouche 1 ainsi formé passe à travers un deuxième groupe de rouleaux presseurs 120.

Le deuxième groupe de rouleaux presseurs 120 comprend un premier rouleau presseur 121 et un deuxième rouleau presseur 122. Le premier rouleau presseur 121 est un rouleau chauffant supportant une matrice 123. La matrice 123 présente des premiers reliefs 124 comprenant des creux 125 et des élévations 126.

Le passage du substrat multicouche 1 à travers le deuxième groupe de rouleaux presseurs 120 permet de former une empreinte dans le substrat multicouche 1 par pressage à chaud de la matrice 123 contre la première couche de pelliculage 3 en matériau polymère.

Par pressage « à chaud », on entend que la matrice 123 est maintenue à une température supérieure à 70°C. De préférence, la matrice 123 est maintenue à une température inférieure à la température de fusion du matériau polymère constituant la première couche de pelliculage 3. Par exemple, pour une couche de pelliculage 3 formée en polypropylène et une durée de contact entre la matrice 123 et la couche de pelliculage 3 comprise entre 1 et 3 secondes, la matrice 123 peut être maintenue à une température comprise entre 70 et 90 degrés Celsius.

Lorsque le substrat multicouche 1 est entrainé en défilement à travers le deuxième groupe de rouleaux presseurs 120, les reliefs de la matrice 123 sont pressés contre la première couche de pelliculage 3, ce qui a pour effet de former une empreinte dans le substrat 1.

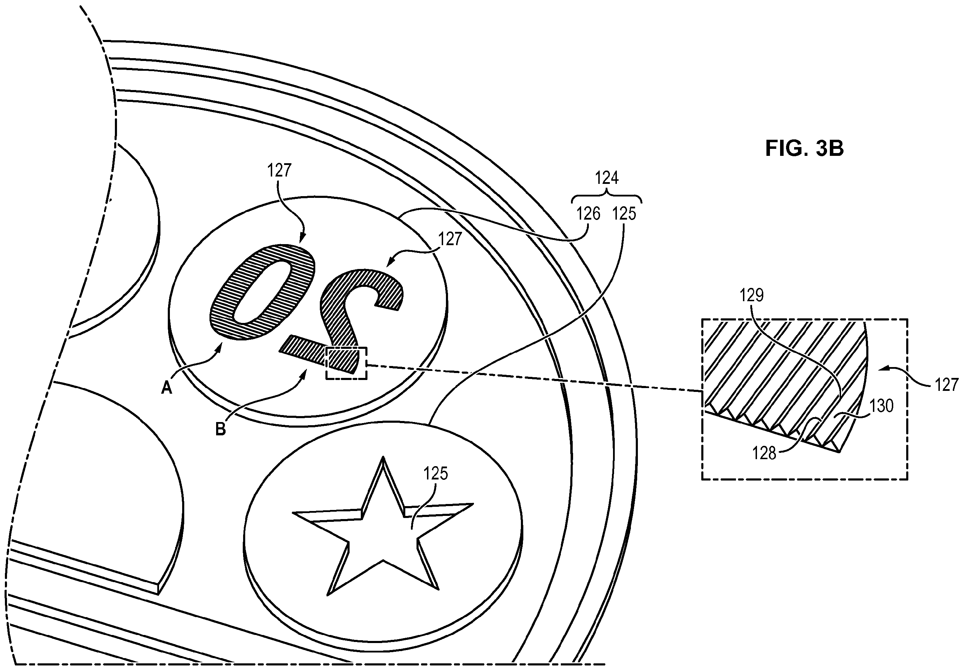

Comme illustré plus précisément sur la figure 3B, la matrice 123 utilisée pour la mise en œuvre du procédé présente des premiers reliefs 124 (ou reliefs macroscopiques) formés par des premiers creux 125 et/ou des premières élévations 126 délimitant plusieurs zones de la matrice.

Par ailleurs, la matrice 123 comprend en outre des deuxièmes reliefs 127 (ou reliefs microscopiques) formés par des deuxièmes creux 128 et/ou des deuxièmes élévations 129 à l'intérieur des zones de la matrice. Les deuxièmes creux 128 et/ou les deuxièmes élévations 129 présentent des dimensions inférieures aux dimensions des premiers creux 125 et/ou des premières élévations 126.

Par exemple, les premiers reliefs 124 présentent une amplitude (mesurée selon une direction radiale du rouleau 121) comprise entre 10 et 100 micromètres et des dimensions caractéristiques (mesurées selon une direction tangentielle au rouleau 121) supérieure à 5 millimètres.

Les deuxièmes reliefs 127 présentent une amplitude comprise entre 1 et 10 micromètres et des dimensions caractéristiques comprises entre 1 et 10 micromètres.

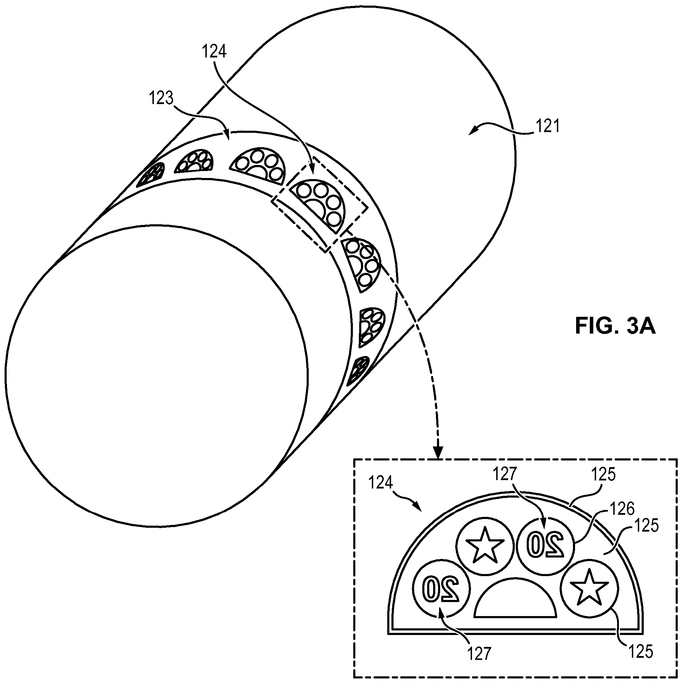

Dans le premier exemple illustré sur les figures 3A et 3B, la matrice 123 comprend plusieurs zones délimitées par les premiers reliefs 124. Certaines zones sont couvertes totalement ou partiellement par des deuxièmes reliefs 127.

Dans le premier exemple illustré sur la figure 3B, les deuxièmes reliefs 127 sont constitués de nervures parallèles entre elles. Les nervures sont disposées de manière périodique (c'est-à-dire avec un écartement transversal constant entre deux nervures successives). De plus, chaque nervure présente une facette 130, orientée en formant un angle non-nul avec un plan tangentiel de la matrice.

Dans le premier exemple illustré sur les figures 3A et 3B, des nervures rectilignes s'étendant selon une première direction sont formée à l'intérieur d'une première zone A, tandis que des nervures rectilignes s'étendant selon une deuxième direction, différente de la première direction sont formées à l'intérieur d'une deuxième zone B. La deuxième direction forme un angle non nul avec la première direction, par exemple un angle de 90 degrés.

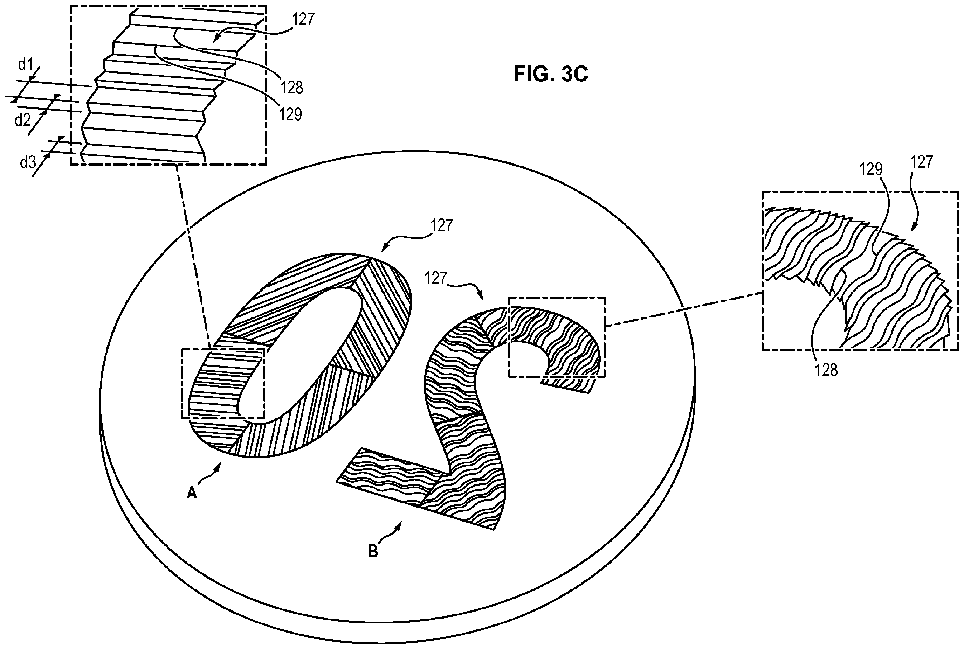

Dans le deuxième exemple illustré sur la figure 3C, les deuxièmes reliefs 127 sont constitués de nervures courbes dans la première zone A, et de nervures rectilignes dans la zone B.

De plus, dans la zone B, les nervures peuvent s'étendre selon des directions différentes, et de manière non-périodique (c'est-à-dire avec un écartement transversal non-constant entre deux nervures successives).

Lorsque la matrice 123 est pressée à chaud contre le substrat 1, le contact entre la matrice 123 et le premier film de pelliculage 3 a pour effet d'une part, de modifier l'état de surface du premier film de pelliculage 3, et d'autre part, de former une empreinte dans le substrat 1.

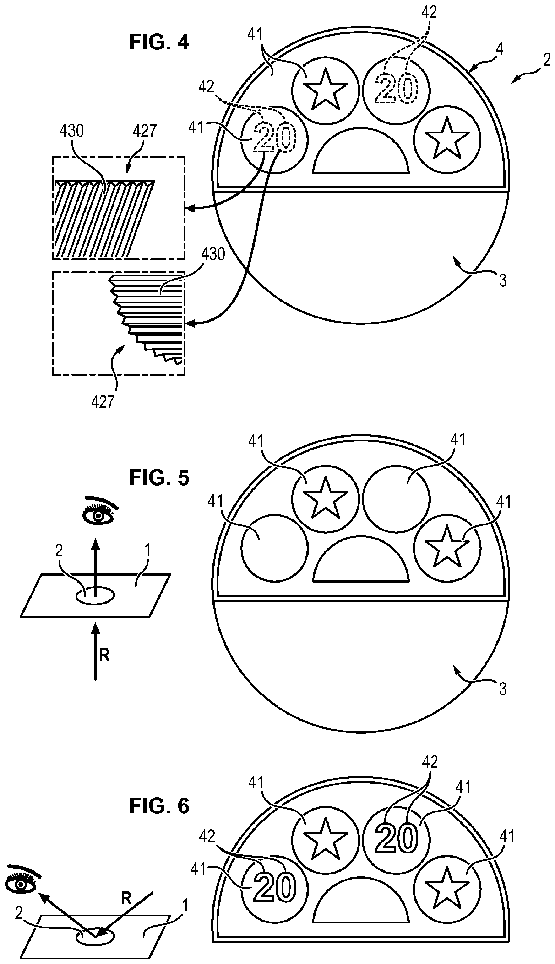

La figure 4 représente de manière schématique un exemple de signe de sécurité 2 obtenu par le procédé.

Le signe de sécurité 2 comprend le filigrane papetier 3 formé uniquement dans la couche de papier 2 et l'empreinte 4 formée dans le substrat multicouche 1 par la matrice 123.

L'empreinte 4 comprend d'une part, des premières zones 41 (délimitées par des traits pleins) formées par le pressage des premiers reliefs 124 de la matrice (ou reliefs macroscopiques) contre la première couche de pelliculage 3. Les premières zones 41 présentent une opacité inférieure à l'opacité du reste du substrat 1.

En particulier, chaque zone 41 présente une opacité inférieure de 1 à 30% par rapport à l'opacité du reste du substrat 1.

L'opacité d'une zone est déterminée selon une méthode de réflexion en lumière diffuse telle que décrite dans la norme NF ISO 2471 de février 2009, « *Papier et carton* - *Détermination de l'opacité sur fond papier - Méthode de réflexion en lumière diffuse ».*

L'empreinte 4 comprend d'autre part, à l'intérieur des premières zones 41, des deuxièmes zones 42 (délimitées par des traits pointillés) correspondant aux zones A et B de la matrice. Dans ces deuxièmes zones 42, le substrat 1 présentent des microstructures 427 créés par les deuxième reliefs 127 de la matrice (ou reliefs microscopiques).

Dans l'exemple illustré sur la figure 4, les microstructures 421 présentent une forme complémentaire des deuxièmes reliefs 127 de la matrice. Ainsi, les microstructures 427 sont constituées de nervures parallèles entre elles, chaque nervure présente une facette 430, orientée en formant un angle non-nul avec la face du substrat sur laquelle elles sont formées. Ces facettes 430 constituent des surfaces réfléchissantes de dimensions microscopiques.

De cette manière, les microstructures 427 sont propres, lorsque le document de sécurité est exposé à un rayonnement lumineux, à réfléchir le rayonnement lumineux selon un ou plusieurs angle(s) privilégié(s) de réflexion. Ce(s) angle(s) privilégié(s) de réflexion dépendent de l'orientation angulaire des facettes 427 des microstructures par rapport à la face du substrat.

Dans l'exemple décrit, les microstructures 427 sont des nervures présentant des faces 430 orientées en formant un angle non-nul avec la face du substrat sur laquelle elles sont formées.

Toutefois, d'autres microstructures permettant de réfléchir le rayonnement lumineux selon un ou plusieurs angle(s) privilégié(s) de réflexion peuvent être réalisées, telles que par exemple des nervures présentant une section transversale en forme de créneau ou encore des structures en forme de microlentilles.

Les premières zones 41 et les deuxième zones 42 sont dépourvues de couche réflectrice, afin de permettre une observation en transparence du signe de sécurité.

La figure 5 représente de manière schématique le signe de sécurité tel qu'il apparait lorsqu'il est observé en transparence, c'est-à-dire lorsque les rayons lumineux R qui sont observés ou détectés sont des rayons lumineux qui ont traversés le substrat 1.

Dans cette configuration, seuls apparaissent le motif du filigrane papetier 3 et les premières zones 41 présentant une opacité inférieure à l'opacité du reste du substrat 1. Les deuxièmes zones 42 présentant les microstructures ne sont pas visibles.

La figure 6 représente de manière schématique le signe de sécurité tel qu'il apparait lorsqu'il est observé en réflexion, c'est-à-dire lorsque les rayons lumineux R qui sont observés ou détectés sont des rayons lumineux qui se sont réfléchis sur le substrat 1.

Dans cette configuration, le filigrane papetier 3 n'est plus visible.

En revanche, les premières zones 41 et les deuxièmes zones 42 sont visibles.

Du fait de la présence de microstructures 427, les deuxièmes zones 42 présentent des niveaux de brillance supérieurs au niveau de brillance du reste du substrat 1 lorsque le document de sécurité est observé selon l'un des angles privilégiés de réflexion des microstructures 427.

De plus, comme les deuxièmes zones 42 présentent des microstructures ayant des angles privilégiés de réflexion différents, la brillance des deuxièmes zones 42 varie en fonction de l'angle sous lequel est observé le substrat 1.

## Revendications

1. Procédé de fabrication d'un document de sécurité à partir d'un substrat (1), le substrat (1) comprenant au moins une couche de papier (11) et au moins une couche de matériau polymère (12) recouvrant une face (21) de la couche de papier (11),
le procédé comprenant une étape consistant à former une empreinte (4) dans le substrat (1) par pressage à chaud d'une matrice (123) contre la couche de matériau polymère (3), la matrice (123) étant **caractérise par** des premiers reliefs (124) comprenant des premiers creux (125) et/ou des premières élévations (126) délimitant plusieurs zones de la matrice, et par des deuxièmes reliefs (127) comprenant des deuxièmes creux (128) et/ou des deuxièmes élévations (129) s'étendant à l'intérieur des zones (41) de la matrice (123), les deuxièmes creux (128) et/ou les deuxièmes élévations (129) présentant des dimensions inférieures aux dimensions des premiers creux (125) et/ou des premières élévations (126),
de sorte que l'empreinte (4) formée dans le substrat (1) présente des premières zones correspondantes (41) créées par les premiers reliefs (124), chaque première zone correspondante (41) présentant une opacité inférieure au reste du substrat, et
à l'intérieur d'au moins l'une des premières zones (41) correspondantes du substrat, une deuxième zone correspondante (42) présentant des microstructures (427) créés par les deuxième reliefs (127), les microstructures (427) étant propres, lorsque le document de sécurité est exposé à un rayonnement lumineux (R), à réfléchir le rayonnement lumineux selon un ou plusieurs angle(s) privilégié(s) de réflexion, afin que lorsque le document de sécurité est observé selon l'un de ces angles privilégiés de réflexion, la deuxième zone correspondante (42) présente un niveau de brillance différent du niveau de brillance du reste de la première zone correspondante (41).

2. Procédé selon la revendication 1, dans lequel, avant l'étape de formation de l'empreinte (4) dans le substrat (1), la couche de matériau polymère (12) présente une brillance de surface inférieure à 40 unités de brillance, avantageusement comprise entre 1 et 30 unités de brillance, de manière encore plus avantageuse comprise entre 5 et 9 unités de brillance.

3. Procédé selon l'une des revendications 1 et 2, dans lequel, après l'étape de formation de l'empreinte (4) dans le substrat (1), la couche de matériau polymère (12) présente, dans chaque première zone correspondante (41) créée par les premiers reliefs (124), une brillance supérieure de 10 à 30 unités de brillance par rapport au reste du substrat.

4. Procédé selon l'une des revendications 1 à 3, dans lequel, après l'étape de formation de l'empreinte (4) dans le substrat, chaque première zone correspondante (41) créée par les premiers reliefs (124) présente une opacité inférieure de 1 à 30% par rapport au reste du substrat.

5. Procédé selon l'une des revendications 1 à 4, dans lequel le document présente, à l'intérieur de chaque deuxième zone correspondante (42) créée par les deuxième reliefs (127), des microstructures (427) propres à réfléchir un rayonnement lumineux (R) selon un angle privilégié de réflexion, les différentes deuxièmes zones (42) du substrat réfléchissant le rayonnement lumineux selon des angles privilégiés différents.

6. Procédé selon l'une des revendications 1 à 5, dans lequel les microstructures (427) présentent une amplitude inférieure ou égale à 10 micromètres.

7. Procédé selon l'une des revendications 1 à 6, dans lequel les microstructures (427) présentent une amplitude supérieure ou égale à 5 micromètres.

8. Procédé selon l'une des revendications 1 à 4, dans lequel les microstructures (427) présentent une dimension mesurée parallèlement à la face de la couche de papier (11), inférieure ou égale à 10 micromètres.

9. Procédé selon l'une des revendications 1 à 8, dans lequel les premières zones correspondantes (41) du substrat créées par les premiers reliefs (124), présentent chacune une dimension supérieure ou égale à 1 millimètre.

10. Procédé selon l'une des revendications 1 à 9, dans lequel le polymère est un polypropylène (PP) ou un polytéréphtalate d'éthylène (PET).

11. Document de sécurité comprenant substrat (1) comprenant une couche de papier (11) et une couche de matériau polymère (12) recouvrant une face (111) de la couche de papier (11), et dans lequel une empreinte (4) est formée dans le substrat (1), l'empreinte (4) formée dans le substrat (1) étant **caractérise par** des premières zones (41) présentant par transparence une première opacité différente de l'opacité du reste du substrat (1), et par une deuxième zone (42) à l'intérieur de l'une des premières zones (41), la deuxième zone (42) présentant des microstructures (427) propres, lorsque le document de sécurité est exposé à un rayonnement lumineux, à réfléchir le rayonnement lumineux selon un angle privilégié de réflexion, de sorte que lorsque le document de sécurité est observé selon l'angle privilégié, la deuxième zone (42) présente un deuxième niveau de brillance différente du niveau de brillance du reste de la première zone (41).

## Patentansprüche

1. Herstellungsverfahren eines Sicherheitsdokuments ausgehend von einem Substrat (1), wobei das Substrat (1) wenigstens eine Schicht aus Papier (11) und wenigstens eine Schicht aus Polymermaterial (12) umfasst, die eine Seite (21) der Schicht aus Papier (11) abdeckt,
wobei das Verfahren einen Schritt umfasst, bestehend aus dem Bilden eines Abdrucks (4) in dem Substrat (1) durch Heißpressen einer Matrize (123) gegen die Schicht aus Polymermaterial (3), wobei die Matrize (123) durch erste Reliefs (124) gekennzeichnet ist, die erste Vertiefungen (125) und / oder erste Erhöhungen (126), die mehrere Bereiche der Matrize begrenzen, und zweite Reliefs (127), die zweite Vertiefungen (128) und / oder zweite Erhöhungen (129) umfassen, die sich im Innern der Bereiche (41) der Matrize (123) erstrecken, umfassen, wobei die zweiten Vertiefungen (128) und / oder die zweiten Erhöhungen (129) kleinere Abmessungen aufweisen als die Abmessungen der ersten Vertiefungen (125) und / oder der ersten Erhöhungen (126),
derart, dass die Vertiefung (4), die in dem Substrat (1) geformt ist, erste entsprechende Bereiche (41) aufweist, die von den ersten Reliefs (124) geschaffen werden, wobei jeder erste entsprechende Bereich (41) eine Lichtundurchlässigkeit aufweist, die geringer ist als der Rest des Substrats, und
wobei im Innern des wenigstens einen der ersten entsprechenden Bereiche (41) des Substrats ein zweiter entsprechender Bereich (42) Mikrostrukturen (427) aufweist, die von den zweiten Reliefs (127) geschaffen werden, wobei die Mikrostrukturen (427) geeignet sind, die Lichtstrahlung gemäß einem oder mehreren privilegierten Reflexionswinkel zu reflektieren, wenn das Sicherheitsdokument einer Lichtstrahlung (R) ausgesetzt wird, damit, wenn das Sicherheitsdokument gemäß einem dieser privilegierten Reflexionswinkel betrachtet wird, der zweite entsprechende Bereich (42) ein von dem Glanzniveau des Restes des ersten entsprechenden Bereichs (41) unterschiedliches Glanzniveau aufweist.

2. Verfahren gemäß Anspruch 1, bei dem vor dem Formungsschritt des Abdrucks (4) in dem Substrat (1) die Schicht aus Polymermaterial (12) einen Oberflächenglanz von weniger als 40 Glanzeinheiten aufweist, der vorteilhaft zwischen 1 und 30 Glanzeinheiten inbegriffen, noch vorteilhafter zwischen 5 und 9 Glanzeinheiten inbegriffen ist.

3. Verfahren gemäß einem der Ansprüche 1 und 2, bei dem nach dem Formungsschritt der Vertiefung (4) in dem Substrat (1) die Schicht aus Polymermaterial (12) in jedem ersten entsprechenden Bereich (41), der von den ersten Reliefs (124) geschaffen wird, einen Glanz von mehr als 10 bis 30 Glanzeinheiten in Bezug auf den Rest des Substrats aufweist.

4. Verfahren gemäß einem der Ansprüche 1 bis 3, bei dem nach dem Formungsschritt des Abdrucks (4) in dem Substrat jeder erste entsprechende Bereich (41), der von den ersten Reliefs (124) geschaffen wird, eine Lichtundurchlässigkeit von weniger als 1 bis 30 % in Bezug auf den Rest des Substrats aufweist.

5. Verfahren gemäß einem der Ansprüche 1 bis 4, bei dem das Dokument im Innern jedes zweiten entsprechenden Bereichs (42), der von den zweiten Reliefs (127) geschaffen wird, Mikrostrukturen (427) aufweist, die geeignet sind, um eine Lichtstrahlung (R) gemäß einem privilegierten Reflexionswinkel zu reflektieren, wobei die unterschiedlichen zweiten Bereiche (42) des Substrats die Lichtstrahlung gemäß unterschiedlichen privilegierten Winkeln reflektieren.

6. Verfahren gemäß einem der Ansprüche 1 bis 5, bei dem die Mikrostrukturen (427) eine Amplitude aufweisen, die kleiner als oder gleich 10 Mikrometer ist.

7. Verfahren gemäß einem der Ansprüche 1 bis 6, bei dem die Mikrostrukturen (427) eine Amplitude aufweisen, die größer als oder gleich 5 Mikrometer ist.

8. Verfahren gemäß einem der Ansprüche 1 bis 4, bei dem die Mikrostrukturen (427) eine Abmessung aufweisen, die parallel zur Seite der Schicht aus Papier (11) gemessen kleiner als oder gleich 10 Mikrometer ist.

9. Verfahren gemäß einem der Ansprüche 1 bis 8, bei dem die ersten entsprechenden Bereiche (41) des von den ersten Reliefs (124) geschaffenen Substrats jeweils eine Abmessung aufweisen, die größer als oder gleich 1 Millimeter sind.

10. Verfahren gemäß einem der Ansprüche 1 bis 9, bei dem das Polymer ein Polypropylen (PP) oder ein Polyethylenterephthalat (PET) ist.

11. Sicherheitsdokument, umfassend das Substrat (1), umfassend eine Schicht aus Papier (11) und eine Schicht aus Polymermaterial (12), die eine Seite (111) der Schicht aus Papier (11) abdeckt und in der ein Abdruck (4) in dem Substrat (1) geformt ist, wobei der in dem Substrat (1) gebildete Abdruck (4) durch die ersten Bereiche (41) gekennzeichnet ist, die per Transparenz eine erste, von dem Rest des Substrats (1) unterschiedliche Lichtundurchlässigkeit aufweisen, und einen zweiten Bereich (42) im Innern eines der ersten Bereiche (41), wobei der zweite Bereich (42) Mikrostrukturen (427) aufweist, die, wenn das Sicherheitsdokument einer Lichtstrahlung ausgesetzt wird, geeignet sind, die Lichtstrahlung gemäß einem privilegierten Reflexionswinkel derart zu reflektieren, dass, wenn das Sicherheitsdokument gemäß dem privilegierten Winkel betrachtet wird der zweite Bereich (42) ein zweites Glanzniveau aufweist, das von dem Glanzniveau unterschiedlich ist, das von dem Rest des ersten Bereichs (41) unterschiedlich ist.

## Claims

1. Process of manufacturing a security document from a substrate (1), where the substrate (1) includes at least one layer of paper (11) and at least one layer of polymer material (12) covering one face (21) of the layer of paper (11),
where the process includes a step of forming an impression (4) in the substrate (1) by hot-pressing a die (123) against the layer of polymer material (3), the die (123) being **characterized by** first reliefs (124) including first recesses (125) and/or first protrusions (126) demarcating several areas of the die, and by second reliefs (127) including second recesses (128) and/or second protrusions (129) extending within the areas (41) of the die (123), where the second recesses (128) and/or the second protrusions (129) are smaller than the first recesses (125) and/or the first protrusions (126),
such that the impression (4) formed in the substrate (1) has first corresponding areas (41) created by the first reliefs (124), where each first corresponding area (41) has a lower opacity than the remainder of the substrate, and
within at least one of the first corresponding areas (41) of the substrate, a second corresponding area (42) with microstructures (427) created by the second reliefs (127), where the microstructures (427) are able, when the security document is exposed to light radiation (R), to reflect the light radiation at one or more preferential angle(s) of reflection, in order that, when the security document is observed from one of these preferential angles of reflection, the second corresponding area (42) has a level of gloss which is different from the level of gloss of the remainder of the first corresponding area (41).

2. Process according to claim 1, wherein, before the step of formation of the impression (4) in the substrate (1), the layer of polymer material (12) has a surface gloss of under 40 gloss units, advantageously between 1 and 30 gloss units, and even more advantageously between 5 and 9 gloss units.

3. Process according to one of claims 1 and 2, wherein, after the step of formation of the impression (4) in the substrate (1), the layer of polymer material (12) has, in each first corresponding area (41) created by the first reliefs (124), a gloss 10 to 30 gloss units higher than the remainder of the substrate.

4. Process according to one of claims 1 to 3, wherein, after the step of formation of the impression (4) in the substrate, the opacity of each corresponding area (41) created by the first reliefs (124) is 1 to 30% lower than that of the remainder of the substrate.

5. Process according to one of claims 1 to 4, wherein, within each second corresponding area (42) created by the second reliefs (127), the document has microstructures (427) able to reflect light radiation (R) at a preferential angle of reflection, where the various second areas (42) of the substrate reflect the light radiation at different preferential angles.

6. Process according to one of claims 1 to 5, wherein the microstructures (427) have an amplitude less than or equal to 10 micrometres.

7. Process according to one of claims 1 to 6, wherein the microstructures (427) have an amplitude greater than or equal to 5 micrometres.

8. Process according to one of claims 1 to 4, wherein the microstructures (427) are, measured parallel to the face of the layer of paper (11), less than or equal to 10 micrometres in size.

9. Process according to one of claims 1 to 8, wherein the first corresponding areas (41) of the substrate created by the first reliefs (124) are each greater than or equal to 1 millimetre in size.

10. Process according to one of claims 1 to 9, wherein the polymer is a polypropylene (PP) or a polyethylene terephthalate (PET).

11. Security document comprising a substrate (1) including a layer of paper (11) and a layer of polymer material (12) covering one face (111) of the layer of paper (11), and wherein an impression (4) is formed in the substrate (1), the impression (4) formed in the substrate (1) being **characterized by** first areas (41) having, when looking through them, a first opacity different from the opacity of the remainder of the substrate (1), and by a second area (42) within one of the first areas (41), where the second area (42) has microstructures (427) able, when the security document is exposed to light radiation, to reflect the light radiation at a preferential angle of reflection, such that when the security document is observed at the preferential angle, the second area (42) has a second level of gloss different from the level of gloss of the remainder of the first area (41).
